**Europäisches Patentamt**

**European Patent Office**

**Office européen des brevets**

(19)

(11) Veröffentlichungsnummer: **0 259 552**
**A1**

(12) # EUROPÄISCHE PATENTANMELDUNG

(21) Anmeldenummer: 87109280.5

(22) Anmeldetag: 27.06.87

(51) Int. Cl.⁴: **A23K 1/16** , **A23K 1/18**

(30) Priorität: 20.08.86 DE 3628250

(43) Veröffentlichungstag der Anmeldung:
16.03.88 Patentblatt 88/11

(84) Benannte Vertragsstaaten:
**AT BE CH ES FR GB IT LI LU NL SE**

(71) Anmelder: **Degussa Aktiengesellschaft**
**Weissfrauenstrasse 9**
**D-6000 Frankfurt am Main 1(DE)**

(72) Erfinder: **Bolze, Rudolf, Dr.**
**Grünaustrasse 1**
**D-6450 Hanau 9(DE)**
Erfinder: **Koch, Friedhelm, Dr.**
**Glatzerstrasse 22**
**D-6451 Grosskrotzenburg(DE)**
Erfinder: **Tanner, Herbert, Dr.**
**Wildaustrasse 20**
**D-6450 Hanau 9(DE)**
Erfinder: **Whitacre, Mark E, Dr.**
**Schanzenstrasse 3**
**D-6450 Hanau 11(DE)**

(54) **Verwendung von Calcium- oder Magnesiumformiat als Mittel zur Leistungsförderung.**

(57) Durch Zusatz von Calcium-oder Magnesiumformiat zum Futter für junge wachsende Schweine und Geflügel wird eine höhere bzw. raschere Gewichtszunahme der Tiere und eine besserer Ausnutzung des aufgenommenen Futters erzielt. Bei den Schweinen bewirkt der Zusatz außerdem eine Verminderung des Auftretens von Ferkeldurchfall.

EP 0 259 552 A1

## Verwendung von Calcium-oder Magnesiumformiat als Mittel zur Leistungsförderung

Die Erfindung betrifft die Verwendung von Calcium-oder Magnesiumformiat als Mittel zur Leistungsförderung bei jungen wachsenden Schweinen und Geflügel.

Die Leistungsförderung kann sich in einer höheren bzw. rascheren Gewichtszunahme und/oder in einer verbesserten Futterverwertung und/oder in verminderten Durchfallerkrankungen zeigen.

Aus in der einschlägigen Literatur veröffentlichten Fütterungsversuchen ist es bekannt, daß der Zusatz verschiedener organischer Säuren zum Futter die Leistung von Nutztieren deutlich verbessern kann.

Eine besonders gute Wirkung haben im allgemeinen Fumarsäure, Propionsäure und Zitronensäure. Diese Säuren können nach ihrer Resorption direkt in den Intermediärstoffwechsel eingreifen und werden dem Zitronensäurezyklus zugeführt und damit für die Energiegewinnung zur Verfügung gestellt.

Zum Teil beruht die Wirksamkeit der dem Futter zugesetzten organischen Säuren auch auf der Beeinflussung der mikrobiellen Besiedlung des Verdauungstraktes durch eine Absenkung des pH-Wertes. Außerdem führt der Zusatz der organischen Säuren zu einer erhöhten Enzymausschüttung über Speichel und Darmwand und zu einer Beeinflussung der bakteriellen Umsetzungen im Darm (M. Kirchgessner und F.X. Roth in "Pig News and Information", Vol. 3, Seiten 259 ff. (1982); A. Halama und E. Roth in "Tierärzl. Umschau" 40, Seiten 105 ff. (1985)).

Organische Säuren werden aufgrund ihrer durch die Absenkung des pH-Wertes bewirkten bakteriostatischen und fungistatischen Eigenschaften außerdem auch zur Konservierung von Futtermitteln oder als Silierhilfsmittel eingesetzt. In der Literatur wird darauf hingewiesen, daß die Wirkung von der undissozierten Säure ausgeht, und daß die entsprechenden Salze hinsichtlich der Geschwindigkeit des Wirkungseintritts, der Wirkungsdauer und der Wirkungsbreite nicht an die Säure heranreichen. Das beruht därauf, daß die Salze nur langsam und unvollständig hydrolysieren (vgl. z.B. Ullmann, Band 19, Seiten 455 ff. (1980)).

Es ist ferner bekannt, daß bei Versuchen zur Leistungsverbesserung durch den Zusatz von Ameisensäure zu Futtermitteln für Broiler nur sehr niedrige Dosierungen einen leicht positiven Effekt auf die Gewichtsentwicklung haben, während bei höheren Dosierungen signifikant schlechtere Gewichtszunahmen beobachtet werden. Die Futterverwertung ist in allen Fällen schlechter als in der Kontrollgruppe ohne Ameisensäure-Zusatz (H. Vogt et al. in "Arch. Geflügelk." 45, Seiten 221 ff. (1981)).

Bei Fütterungsversuchen mit Schweinen führt der Zusatz von 0,6 Gewichtsprozent Ameisensäure zu einer geringfügigen Verbesserung der täglichen Gewichtszunahme, der Zusatz von 1,2 Gewichtsprozent Ameisensäure dagegen zu einer Verringerung. Auch die Futterverwertung ist bei der höheren Dosierung deutlich schlechter (P. Vanderwal in "World's Poultry Sci. J." 35, Seiten 70 ff. (1979)).

Es wurde nun gefunden, daß der Zusatz von Calcium-oder Magnesiumformiat zum Futter für junge wachsende Schweine und für Geflügel eine deutliche Verbesserung der Gewichtszunahme und eine ebenso deutliche Verbesserung der Futterverwertung bewirkt.

Das Calcium-oder Magnesiumformiat wird zweckmäßigerweise in einer Menge zwischen 0,4 und 4,0 Gewichtsprozent, bezogen auf das Gesamtgewicht des Futters, eingesetzt. Bei Broilern werden besonders gute Ergebnisse durch den Zusatz von 0,5 bis 1,5 Gewichtsprozent Calcium-oder Magnesiumformiat erhalten, bei Schweinen durch den Zusatz von 0,5 bis 3,6 Gewichtsprozent Calcium-oder Magnesiumformiat.

Bei Schweinen bewirkt der Zusatz des Calcium-oder Magnesiumformiats ferner eine Verminderung des Auftretens von Ferkeldurchfall, bei Geflügel eine Verminderung des Wassergehalts in den Exkrementen.

Die leistungsfördernde Wirkung der erfindungsgemäß zu verwendenden Formiate, die keine direkte Absenkung des ph-Wertes bewirken können, ist umso überraschender als die Ameisensäure im Stoffwechsel nicht dem Zitronensäurezyklus zugeführt werden kann. Die beobachteten Effekte können somit nicht durch eine höhere Energieversorgung erklärt werden.

Die Erfindung soll durch die nachfolgenden Beispiele und Vergleichsversuche verdeutlicht werden:

Beispiel 1:

Es wurde ein Fütterungsversuch mit 60 jungen wachsenden Schweinen im Gewichtsabschnitt von 10 bis 30 kg, eingeteilt in 5 Gruppen von jeweils 12 Tieren, durchgeführt. Die Tiere waren in Einzelkäfigen auf Drahtboden untergebracht. Das Futter wurde ad libitum verabreicht.

Die 1. Gruppe erhielt die Normalration, ein Ferkelaufzuchtfutter der folgenden Zusammensetzung (in Gewichtsprozent):

Maisschrot    39,52
Gerste    20
Tapiokamehl    10
Sojavollmehl    15,5
Magermilchpulver    8
Fischmehl    3
Vitamine und Spurenelemente    3
Kohlensaurer Kalk    0,8
L-Lysin . HCl    0,12
DL-Methionin    0.06

Im Futter der 2. Gruppe wurde der Anteil des Tapiokamehls auf 9,5 % und der Anteil des kohlensauren Kalks auf 0,4 % zurückgenommen und es wurden 0,9 % Calciumformiat zugesetzt.

Im Futter der 3., 4. und 5. Gruppe wurde kein kohlensaurer Kalk mehr gegeben, der Anteil des Tapiokamehls wurde auf 9,0 bzw. 8,1 bzw 7,2 % zurückgenommen und es wurden 1,8 bzw. 2,7 bzw. 3,6 % Calciumformiat zugesetzt.

In der folgenden Tabelle 1 sind für jede der 5 Gruppen die durchschnittliche Gesamtzunahme während des über 35 Tage laufenden Versuchs, die durchschnittliche tägliche Futteraufnahme, die durchschnittliche Futterverwertung und die Durchfallhäufigkeit zusammengestellt:

Tabelle 1

| Gruppe | Zunahme über 35 Tage (kg) | tägliche Zunahme (g) | Futterauf- aufnahme (g/Tag) | Futterver- verwertung (g Futter pro g Zunahme) | Durchfall- häufigkeit (%) |
|---|---|---|---|---|---|
| Normalration | 16,5 | 471 | 966 | 2,05 | 18,2 |
| 0,9 % Calcium- formiat | 17,6 | 502 | 959 | 1,91 | 6,8 |
| 1,8 % Calcium- formiat | 18,1 | 517 | 978 | 1,89 | 8,3 |
| 2,7 % Calcium- formiat | 17,9 | 511 | 956 | 1,87 | 5,2 |
| 3,6 % Calcium- formiat | 18,0 | 514 | 952 | 1,85 | 4,3 |

0 259 552

Beispiel 2:

Es wurde ein Fütterungsversuch mit 96 jungen wachsenden Schweinen, eingeteilt in 4 Gruppen von jeweils 24 Tieren, in Bodenhaltung durchgeführt.

Die 1. Gruppe erhielt die Normalration, ein Ferkelaufzuchtfutter der folgenden Zusammensetzung (in Gewichtsprozenten):

Weizen 24,0
Hafer 8,0
Mais 31,0
Luzernegrünmehl 3,3
Sojaextraktionsschrot 9,0
Maiskleberfutter 5,0
Weizenkleie 10,0
Fischmehl 6,0
Mineralstoff-und Vitaminmischung 1,0
Kohlensaurer Kalk 1,7
Tapiokamehl 1,0

Im Futter der 2. Gruppe wurde das Tapiokamehl weggelassen und der Anteil des kohlensauren Kalks auf 1,2 % zurückgenommen. Dafür wurden 1,5 % Calciumformiat zugesetzt.

Im Futter der 3. und 4. Gruppe wurde das Tapiokamehl weggelassen und der Anteil des Mais auf 30,5 % zurückgenommen. Dafür wurden 1,5 % Fumarsäure bzw. 1,5 % Ameisensäure zugesetzt.

In der folgenden Tabelle 2 sind für jede der 4 Gruppen die durchschnittliche tägliche Zunahme in Gramm und in %, bezogen auf die Gruppe mit der Normalration (= 100 %), und die Futterverwertung in g Futter pro g Zunahme und in %, bezogen wiederum auf die Gruppe mit der Normalration (= 100 %), zusammengestellt:

Tabelle 2

| Gruppe | tägliche Zunahme | | Futterverwertung | |
|---|---|---|---|---|
|  | (g) | (%) | (g/g) | (%) |
| Normalration | 436 | 100 | 1,96 | 100 |
| 1,5 % Calciumformiat | 505 | 116 | 1,84 | 94 |
| 1,5 % Fumarsäure | 445 | 102 | 1,94 | 99 |
| 1,5 % Ameisensäure | 440 | 101 | 1,96 | 100 |

Beispiel 3:

Es wurde ein Fütterungsversuch mit 560 Mastbroilern, eingeteilt in 7 Gruppen von jeweils 80 Tieren, mit einem Anfangsalter von 7 Tagen und einem Endalter von 28 Tagen durchgeführt. Die Tiere waren in Käfigen untergebracht.

0 259 552

Die 1. Gruppe erhielt eine Normalration folgender Zusammensetzung (in Gewichtsprozent):

Mais    55,8
Sojaöl    3
Maiskleber    12
Sojaextraktionsschrot    25
Dicalciumphosphat    2
Kohlensaurer Kalk    0,9
Aminosäuren    0,5
Vitamine und Spurenelemente    0,8

Im Futter der 2. Gruppe wurde der Anteil des Mais auf 55,6 % und der Anteil des kohlensauren Kalks auf 0,6 % zurückgenommen. Dafür wurden 0,5 % Calciumformiat zugesetzt.

Im Futter der 3. Gruppe wurde der Anteil des Mais auf 55,4 % und der Anteil des kohlensauren Kalks auf 0,3 % zurückgenommen. Dafür wurden 1,0 % Calciumformiat zugesetzt.

Im Futter der 4. Gruppe wurde der Anteil des Mais auf 55,2 % zurückgenommen und kein kohlensaurer Kalk gegeben. Dafür wurden 1,5 % Calciumformiat zugesetzt.

Im Futter der 5., 6. und 7. Gruppe wurde der Anteil des Mais auf 55,3 bzw. 54,8 bzw. 54,3 % zurückgenommen und es wurden 0,5 bzw. 1,0 bzw. 1,5 % Magnesiumformiat zugesetzt.

In der folgenden Tabelle 3 sind für jede der 7 Gruppen das durchschnittliche Gewicht im Alter von 28 Tagen in Gramm und in %, bezogen auf die Gruppe mit der Normalration (= 100 %), die durchschnittliche tägliche Zunahme, die durchschnittliche tägliche Futteraufnahme und die Futterverwertung in g Futter pro g Zunahme und in %, bezogen wiederum auf die Gruppe mit der Normalration (= 100 %), zusammengestellt:

0 259 552

Tabelle 3

| Gruppe | Endgewicht (g) | (%) | tägliche Zunahme (g) | tägliche Futter- aufnahme (g) | Futterver- wertung (g/g) | (%) |
|---|---|---|---|---|---|---|
| Normalration | 610 | 100 | 24,7 | 47 | 1,90 | 100 |
| 0,5 % Calcium- formiat | 628 | 103 | 25,5 | 48 | 1,88 | 99 |
| 1,0 % Calcium- formiat | 640 | 107 | 26,0 | 48 | 1,85 | 97,4 |
| 1,5 % Calcium- formiat | 635 | 104 | 25,8 | 48,5 | 1,88 | 99 |
| 0,5 % Magnesium- formiat | 620 | 102 | 24,9 | 46 | 1,85 | 97,4 |
| 1,0 % Magnesium- formiat | 624 | 102 | 25,8 | 47,5 | 1,84 | 96,8 |
| 1,5 % Magnesium- formiat | 625 | 102 | 25,5 | 46,5 | 1,82 | 95,8 |

**Ansprüche**

Verwendung von Calcium-oder Magnesiumformiat als Mittel zur Leistungsförderung bei jungen wachsenden Schweinen und Geflügel.

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 081 970 (BP CHEMICALS LIMITED) * Patentansprüche 1,3,5 * --- | 1 | A 23 K 1/16 A 23 K 1/18 |
| X | DE-A-2 751 768 (BASF) * Patentansprüche 1,2; Seite 5, Absatz 4; Seite 9, letzter Absatz * --- | 1 | |
| X | CHEMICAL ABSTRACTS, Band 32, Nr. 6, März 1938, Spalte 2179(7), Columbus, Ohio, US; W. WÖHLBIER et al.: "Comparative feeding experiments with calcium carbonate and calcium formate with young hens" & BIEDERMANNS ZENTR. B. TIERERNÄHR. 9, 371-3 (1937) * Zusammenfassung * --- | 1 | |
| A | US-A-2 731 348 (ALVIN J. STRIEGEL) * Patentanspruch 1 * --- | 1 | |
| A | FR-A-1 332 053 (SOVILO) * Patentansprüche 1,3; Seite 1, linke Spalte, Zeilen 1-9 * --- | 1 | **RECHERCHIERTE SACHGEBIETE (Int. Cl.4)** |
| A | DE-A-2 813 117 (UNISCOPE) * Patentansprüche 1,2,5,25 * ----- | 1 | A 23 K A 61 K |

Der vorliegende Recherchenbericht wurde für alle Patentansprüche erstellt

| Recherchenort | Abschlußdatum der Recherche | Prüfer |
|---|---|---|
| DEN HAAG | 09-12-1987 | DEKEIREL M.J. |